# EUROPEAN PATENT SPECIFICATION

(11) **EP 2 003 393 B1**
(45) Date of publication and mention of the grant of the patent: **16.05.2012**
(21) Application number: 07011357.6
(22) Date of filing: 11.06.2007
(51) Int. Cl.: F21S 9/03, F21V 23/04, H05B 39/04, F21S 11/00, F21V 9/02

(54) **Daylight reflecting artificial light**
Tageslichtwiedergebendes Kunstlicht
Dispositif d'éclairage artificiel transmettant la lumière du jour

(43) Date of publication of application: 17.12.2008
(73) Proprietor: VKR Holding A/S, 2970 Hørsholm (DK)
(72) Inventor: Nygaard, Johnny, 8722 Hedensted (DK); Jacobsen, Per, 8700 Horsens (DK)

(56) References cited:
- WO-A-2006/028703
- DE-A1- 3 604 269
- US-A1- 2004 246 596
- US-A1- 2005 274 407
- US-A1- 2006 272 692

## Description

### FIELD OF THE INVENTION

The present invention relates to artificial indoor lighting, such as electric lighting, and in particular to comfort of artificial lighting.

### BACKGROUND OF THE INVENTION

Artificial electric light powered by alternating current from the grid is well-known for indoor lighting in buildings, homes or offices when the amount of daylight entering the building is absent or not sufficient. In many cases artificial lighting is used to support the available natural daylight. Natural daylight may enter a building through wall or roof mounted windows. Sun tunnels are also used. Sun tunnels channel daylight from a window at the roof to a lower place in the building.

CA 2,337,293 discloses a sun tunnel that brings daylight into a building during the day when daylight is available. This sun tunnel is further provided with a photovoltaic panel coupled to a battery and an LED light. The battery is charged during the day with power from the photovoltaic panel. The battery powers the LED light during the night when daylight is not available.

US 2006/0272692 discloses a party-tent with an illuminating device for providing outdoor leisure use at night comprises one roof assembly including one top positioned first multi-directional angle-joint 1, a plurality of inclined bars 14 and a plurality of transverse bars 13, the inclined bar 14, one end connects to a first multi-directional angle-joint 1, and other end to a second multi-directional angle-Joint 2; a plurality of second multi-directional angle-Joints 2 are horizontally arranged at each corner of the tent; a plurality of surrounding walls each formed by two adjacent upright corner members 3, each upright corner member 3 of the surrounding walls being formed by two crossed erect panels, the erect panel is a prefabricated, which is constructed by first erect pole 11 and second erect pole 15, and having a plurality of lateral short bars 12 connected there between; a plurality of inclined bars 14 having plurality of light bulbs thereon, which are energized by top positioned solar energy power supply unit.

It has been realized by the inventors of the present invention that artificial lighting is sometimes perceived as unpleasant and "artificial".

### DISCLOSURE OF THE INVENTION

On this background, it is an object of the present invention to provide an artificial lighting system that is not, or at least to a lesser extent perceived as unpleasant.

This object is achieved by providing an artificial lighting system comprising an electrical indoor light directly connected to an external photovoltaic panel.

The direct coupling between the external photovoltaic panel and the electrical indoor light ensures that the intensity of the electrical indoor light varies in harmony with the intensity of the actual daylight. This nexus between the intensity of the indoor light and the actual daylight is by many individuals perceived as more comfortable and natural.

Preferably, the photovoltaic panel is placed so as to be exposed to daylight. Thus, it is ensured that the photovoltaic panel generates power for the indoor electrical light.

The connection between the indoor light and the photovoltaic panel can be configured to simulate natural daylight.

The connection between the indoor light and the photovoltaic panel can be configured for the electrical indoor light to follow variations in intensity of the actual daylight.

The artificial lighting system can further comprise an external color sensor coupled to means for varying the color of the light emitted by the electrical indoor light.

The artificial lighting system may further be configured for the color of the electrical indoor light to follow variations in color of the actual daylight. Thus, both the intensity and the color of the artificial electrical light harmonize with the intensity and color of the actual daylight, thereby further increasing the nexus between the artificial light and the actual daylight.

The electric indoor light may include one or more LEDs or an organic LED array.

The artificial lighting system may comprise a plurality of photovoltaic panels coupled to a plurality of electrical indoor lights.

The electrical indoor lights can be distributed over a building in which they are used.

Each indoor light can have a particular photovoltaic panel associated therewith.

Preferably, a photovoltaic panel associated with a given electrical indoor light is placed on the building in an area above the electrical indoor light concerned.

The artificial lighting system may not include any batteries or means for controlling or regulating the intensity of the light emitted by the electrical indoor lights.

It is yet another object of the present invention to provide a method of lighting an indoor space with artificial light that is perceived as more natural.

This object is achieved by providing a method of lighting an indoor space comprising providing an external photovoltaic panel, coupling an electric indoor light that is placed within the space with a direct electrical connection to the photovoltaic panel.

Preferably, the method further comprises detecting the color of the actual daylight to which the external photovoltaic panel is exposed and adapting the color emitted by the electric indoor light to the actual color of the daylight.

Further objects, features, advantages and properties of the artificial lighting system and lighting method according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Figure 1 is a diagrammatic sectional view through a building that is provided with an artificial lighting system according to an embodiment of the invention,
Figure 2 is a diagrammatic sectional view through a building that is provided with an artificial lighting system according to another embodiment of the invention,
Figure 3 is a diagrammatic view of another embodiment of the artificial lighting system according to the invention,
Figure 4 is a graph illustrating the power supply to a light source,
Figure 5 is a diagrammatic view of another embodiment of the artificial lighting system according to the invention,
Figure 6 is a diagrammatic view of another embodiment of the artificial lighting system according to the invention,
Figure 7 is a graph illustrating the power generated by a single photovoltaic panel,
Figure 8 is a graph illustrating the power generated by a combination of two photovoltaic panels, and
Figure 9 is a diagrammatic view of another embodiment of the artificial lighting system according to the invention.

### DETAILED DESCRIPTION OF PREFERRED EMBODIMENTS

In the following detailed description, the artificial lighting system and method according to the invention will be described by the preferred embodiments.

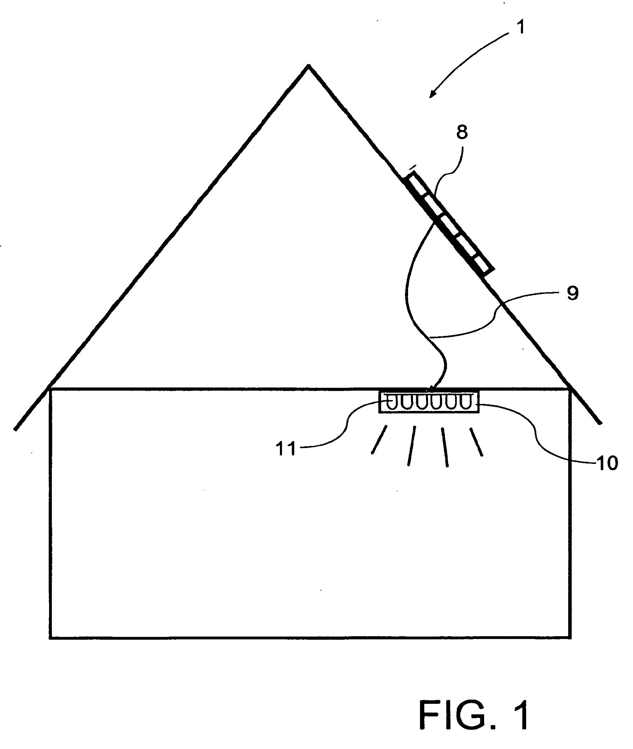

Figure 1 illustrates a building 1, such as a house or an office building. The artificial lighting system according to an embodiment of the invention includes a photovoltaic panel 8 that is mounted on the roof of the building 1. The photovoltaic panel 8 is connected to an electric indoor light 10 by a cable 9. The electric indoor light 10 may include a plurality of LEDs 11 or organic LED arrays.
The cable 9 connects the photovoltaic panel 8 directly with the electric indoor light 10. Apart from an on/off switch (not shown and optional) the connection between the photovoltaic panel 8 and the electric indoor light 10 does not have any control elements or means for accumulating electric energy, such as a battery.

The position of the photovoltaic panel 8 on the roof of the building 1 is chosen according to two criteria. The position of the photovoltaic panel is preferably chosen to be substantially above the electric indoor light 10, and at the same time it is ensured that the photovoltaic panel is exposed to daylight, i.e. it is avoided that it is placed in a shadow or other position in which it will not receive any daylight. The direct positioning of the photovoltaic panel 8 above the electric indoor light 10 ensures that the variations in intensity of the light emitted by the electric indoor light 10 correspond to the daylight conditions directly above the area illuminated by the electric indoor light 10.

The direct connection between the photovoltaic panel 8 and the electric indoor light 10 ensures that the intensity of the light emitted by the electric indoor light 10 varies with the intensity of the actual daylight as received by the photovoltaic panel 8 on the roof of the building.

The electric lighting system may include a plurality of photovoltaic panels 8 and a plurality of electric indoor lights 10. In an embodiment the photovoltaic panels 8 are connected one on one with the electric indoor lights 10, so that the variation in light intensity corresponds to the actual local daylight intensity right above the electric indoor light concerned. Alternatively, in another embodiment the power from the photovoltaic panels 8 is combined and distributed evenly amongst the indoor lights 10.

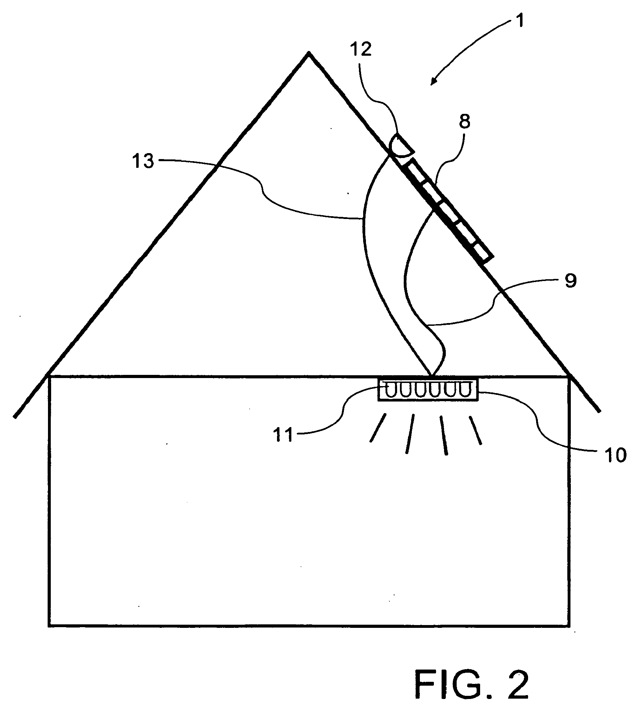

Figure 2 illustrates another embodiment of the artificial lighting system according to the invention that is essentially identical with the embodiment described with reference to figure 1 except for the following differences. A color sensor 12 mounted on the roof in the vicinity of the photovoltaic panel 8 detects the color of the received daylight. The signal of the color sensor 12 is transmitted to the electric indoor light 10 by a cable 13. In this embodiment, the electric indoor light 10 is provided with a system for changing the color of the emitted light in accordance with the signal received from the color sensor 12. The color variation of the emitted light can in an embodiment be obtained by changing the intensity of the activation of three different colors of LEDs 11 (e.g. Red, blue and green LEDs).

In this embodiment, the color of the light emitted by the electric indoor light 10 follows the changes in color of the actual daylight to which the photovoltaic panel 8 and the color sensor 12 are exposed. Thus, in this embodiment variations in daylight color are reflected by changes in the color of the light emitted by the electric indoor light 10. According to an embodiment, the color of the light emitted by the electric indoor light 10 matches as good as possible the color of the daylight received by the color sensor 12.

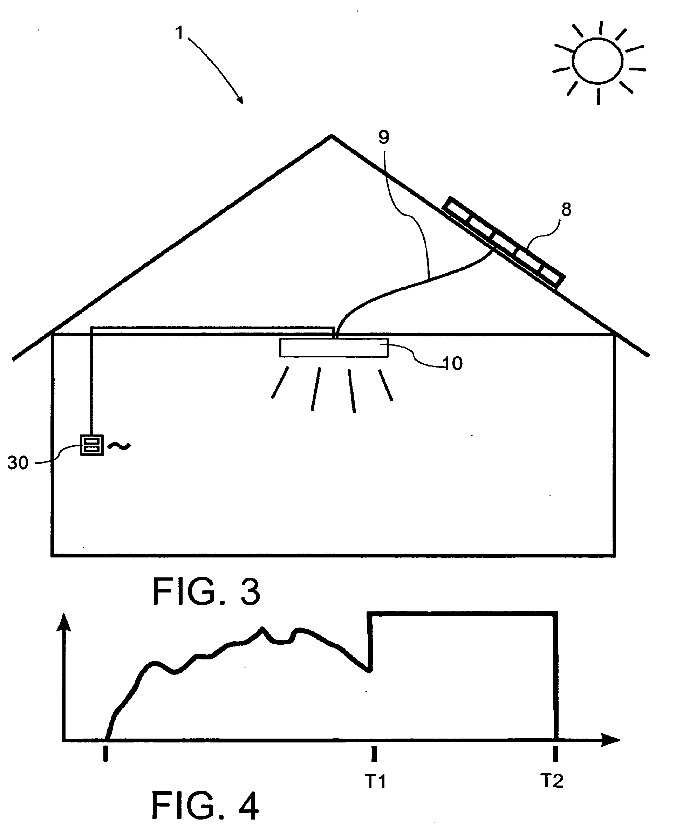

Figure 3 illustrates an embodiment of the invention with two modes. This embodiment is essentially identical with the previous embodiment, except that the illumination device 10 is connected to the solar cell panel 8 and to a 230V source 30. In mode 1 the illumination source reproduces fluctuating outdoor light (free mode). In mode 2 the illumination source works as ordinary lamp with constant light powered by the mains.

The modes are changed by the AC mains power on/off switch 30. The device indicates whether it operates in free natural mode or in power consuming mode, for example by lightning more LED's to create a pattern (spots) or by using a different color in artificial mode.

Figure 4 is a graph illustrating the light intensity produced by the indoor light 10 during a day with the time being projected on the horizontal axis and the light intensity being projected on the vertical axis. At the point in time T1 the AC mains power on/off switch 30 is placed in the "on" position then at T2 the on/off switch 30 is placed in the "off" position.

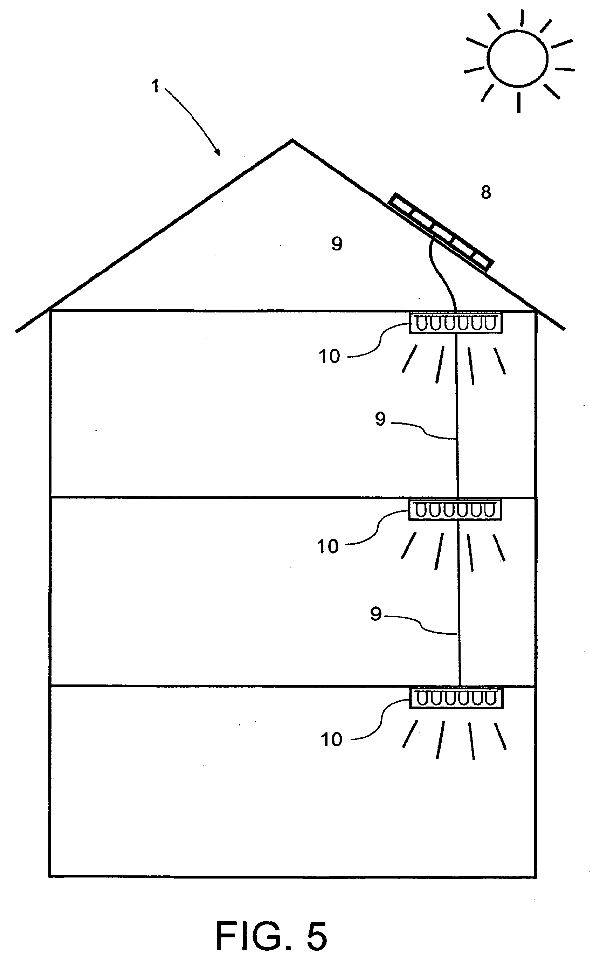

Figure 5 shows another embodiment of the invention. This embodiment is essentially identical to the embodiment described with reference to figure 1, except that in this embodiment one solar panel 8 powers multiple light sources 10: in this embodiment one light source 10 on each floor. The light sources 10 could of course be distributed differently in the building 1 (not shown). With the ordinary light pipes this configuration is not possible, but the solar panel configuration according to this embodiment provides a natural light source in locations out of reach of prior art tubular light pipes. Further, the layout of the light sources matters. The light source may be arranged as several light sources which provide better illumination that is much more uniformly distributed.

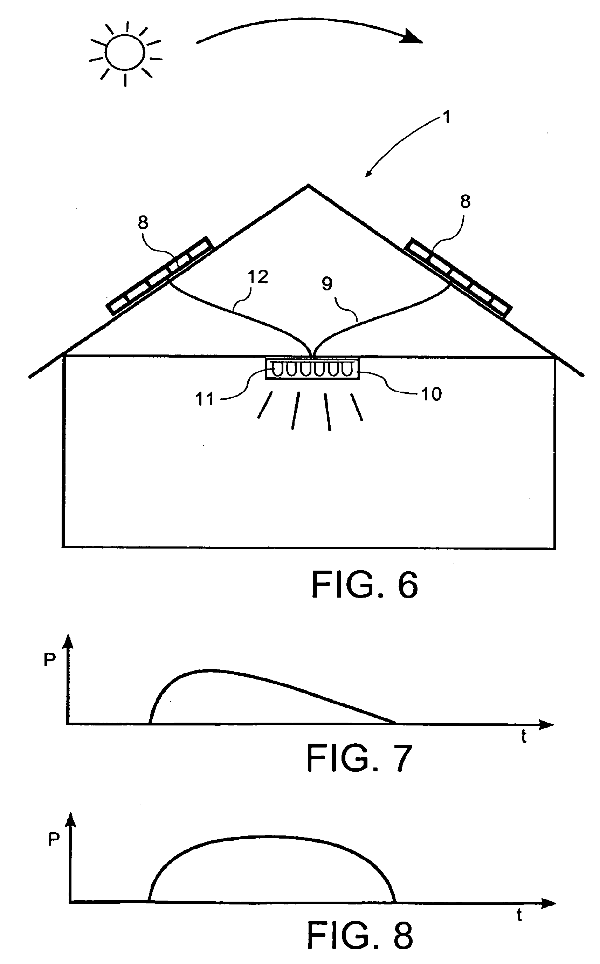

Figure 6 illustrates another embodiment of the invention that is essentially identical to the embodiment described with reference to figure 1, except that in this embodiment multiple solar cells panels 8 oriented in various directions are mounted on the roof of the building 1. For example, one solar panel 8 has high efficiency during morning and another solar panel 8 has high efficiency during evening. The difference being caused by the different orientation relative to moving position of the sun. This construction evens out the light cycle across the day as illustrated by the graphs in figure 7 and figure 8. The graph in figure 7 illustrates the power output of the photovoltaic panel 8 on the left side of the building alone. Figure 8 shows the power output of the combined photovoltaic panels 8.

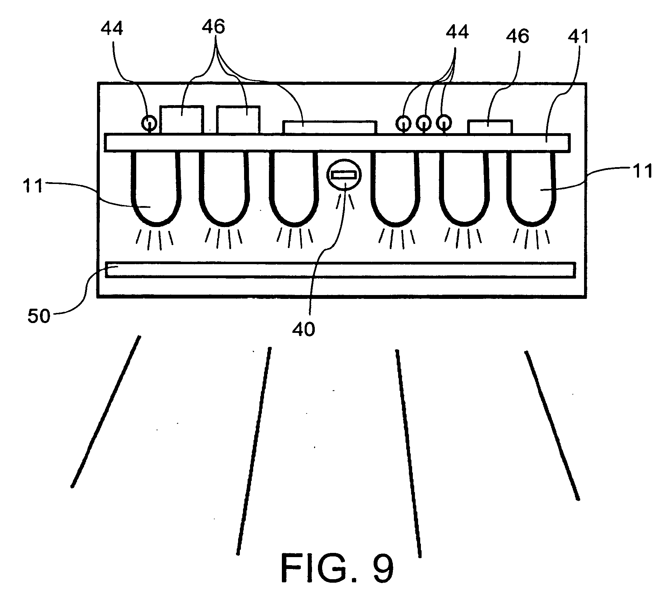

Figure 9 illustrates another embodiment of the invention. In this embodiment one or more photovoltaic panels 8 are provided on the roof of the building or other suitable place. The photovoltaic panel or panels 8 are provided with a color sensor on the roof (not shown). The light source 10 is also provided with a color sensor 40 inside in the light source. The color sensor 40 inside the light source 10 is used to adjust/calibrate/regulate the artificial light, so it is as close as possible to the natural light as detected by the color sensor on the roof. This construction allows to compensate for the fact that the LED characteristics vary much LED to LED and to alleviate this problem the manufacturers sort the LED's in sorted groups to ensure constant quality (this raises the price) but still a LED from one shipment may differ from a LED from another shipment. The color sensor arrangement allows the use of cheap LEDs and still get an accurate output color.

In this embodiment the LEDs 11 suitable for adjusting/tuning the color of the light and e.g. colored LEDs in a red green blue combination (RGB) in combination with intensity control for the respective colors is used to obtain the desired color of the emitted light.

The LEDs 11 are mounted on a printed circuit board 41 (LEDs require resistors 44 because their internal resistance is very low) and a control circuit 46 is present on the printed circuit board 41.

A diffuser plate 50 is used to diffuse the light produced by the LEDs.

The artificial lighting system and method according to the invention can be used in combination with daylight from windows or the like as the only light in an environment. The artificial lighting system and method according to the invention can be used in combination with conventional artificial lighting.

The invention has numerous advantages. Different embodiments or implementations may yield one or more of the following advantages. It should be noted that this is not an exhaustive list and there may be other advantages which are not described herein. One advantage of the invention is that it allows for a natural link between actual daylight and artificial light in an indoor environment. Another advantage of the invention is that it increases comfort for individuals in an environment that is lighted at least partially with artificial light. Another advantage of the invention is a reduced cost of installation. Yet another advantage of the invention is that it provides for an environmental friendly light source that saves energy.

The term "comprising" as used in the claims does not exclude other elements or steps. The term "a" or "an" as used in the claims does not exclude a plurality.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon. Moreover, it should be appreciated that those skilled in the art, upon consideration of the present disclosure, may make modifications and/or improvements on the apparatus hereof and yet remain within the scope hereof as set forth in the following claims.

## Claims

1. An artificial lighting system for a building, said system comprising an electrical indoor light (10) connected to an external photovoltaic panel (8) mounted on the outside of the building in which the electrical indoor light (10) is mounted, **characterized in** said electrical indoor light (10) being in direct electrical connection with said external photovoltaic panel (8) through a cable (9) and an optional switch whereby the intensity of the electrical indoor light varies with the intensity of the actual daylight.

2. An artificial lighting system according to claim 1, wherein the photovoltaic panel (8) is placed so as to be exposed to daylight.

3. An artificial lighting system according to claim 2, wherein the connection between the indoor light (10) and the photovoltaic panel (8) is configured to simulate natural daylight.

4. An artificial lighting system according to claim 3, wherein the connection between the indoor light (10) and the photovoltaic panel (8) is configured for the electrical indoor light (10) to follow variations in intensity of the actual daylight.

5. An artificial lighting system according to claim 3 or 4, further comprising an external color sensor (12) coupled to means for varying the color of the light emitted by the electrical indoor light (10).

6. An artificial lighting system according to claim 5, further being configured for the color of the electrical indoor light (10) to follow variations in color of the actual daylight.

7. An artificial lighting system according to any of claims 1 to 6, wherein said electric indoor light (10) includes one or more LEDs or an organic LED array.

8. An artificial lighting system according to any of claims 1 to 7, comprising a plurality of photovoltaic panels (8) coupled to a plurality of electrical indoor lights (10).

9. An artificial lighting system according to claim 8, wherein said electrical indoor lights (10) are distributed over a building in which the electrical indoor lights (10) are used.

10. An artificial lighting system according to claim 9, wherein each indoor light (10) has a particular photovoltaic panel (8) associated therewith.

11. An artificial lighting system according to claim 10, wherein the photovoltaic panel (8) associated with a given electrical indoor light (10) is placed on the building in an area above the electrical indoor light (10) concerned.

12. An artificial lighting system according to any of claims 1 to 11, wherein the electrical connection between the photovoltaic panel (8) and the electrical indoor light does not comprise any electrical components that have substantial influence the characteristic of the electrical connection between the photovoltaic panel (8) and said electrical indoor light (10) other than wires and switches.

13. An artificial lighting system according to any of claims 1 to 12, further comprising a color sensor (12) on the building coupled to a controller that controls the color of the light emitted by the artificial indoor light (10).

14. An artificial lighting system according to claim 13, wherein the control is configured to match the color of the light emitted by the artificial indoor light (10) to the color of the daylight as detected by the sensor (12) on the building.

15. An artificial lighting system according to claim 13 or 14, wherein said artificial indoor light includes a color sensor (12) detecting the color of the light emitted by the artificial indoor light (10).

16. An artificial lighting system according to any of claims 1 to 15, comprising at least two photovoltaic panels (8) that are positioned to compensate for an uneven combined power output caused by the movement of the sun during the day.

17. An artificial lighting system according to any of claims 1 to 16, further comprising a electrical connection between the mains and the artificial indoor lighting (10) that can be disconnected.

18. A method of lighting an indoor space comprising:
providing an external photovoltaic panel (8) on an outside of a building enclosing said space,
coupling an electric indoor light (10) that is placed within said space in direct electrical connection with said photovoltaic panel (8) through a cable (9) and an optional switch, whereby the intensity of the electrical indoor light varies with the intensity of the actual daylight.

19. A method according to claim 18, further comprising detecting the color of the actual daylight to which the external photovoltaic panel (8) is exposed and adapting the color emitted by said electric indoor light (10) to the actual color of the daylight.

20. Use of a photovoltaic panel(8) being positioned on an outside of a building enclosing an indoor space for simulating daylight in said indoor space, by connecting an electric indoor light (10) in direct electrical connection with said photovoltaic panel (8) through a cable (9) and an optional switch, whereby the intensity of the electrical indoor light varies with the intensity of the actual daylight

## Patentansprüche

1. Kunstlicht-Beleuchtungssystem für ein Gebäude, wobei das System umfasst: eine elektrische Innenbeleuchtung (10), verbunden mit einem außen angebrachten Photovoltaik-Panel (8), welches an der Außenseite des Gebäudes befestigt ist, in welchem die elektrische Innenbeleuchtung (10) angebracht ist, **dadurch gekennzeichnet, dass** die elektrische Innenbeleuchtung (10) in direkter elektrischer Verbindung steht mit dem außen angebrachten Photovoltaik-Panel (8), durch ein Kabel (9) und einen optionalen Schalter, wobei die Lichtintensität der elektrischen Innenbeleuchtung sich mit der Intensität des tatsächlichen Tageslichts ändert.

2. Kunstlicht-Beleuchtungssystem nach Anspruch 1, wobei das Photovoltaik-Panel (8) derart angeordnet ist, dass es dem Tageslicht ausgesetzt ist.

3. Kunstlicht-Beleuchtungssystem nach Anspruch 2, wobei die Verbindung zwischen der Innenbeleuchtung (10) und dem Photovoltaik-Panel (8) derart gestaltet ist, dass natürliches Tageslicht simuliert wird.

4. Kunstlicht-Beleuchtungssystem nach Anspruch 3, wobei die Verbindung zwischen der Innenbeleuchtung (10) und dem Photovoltaik-Panel (8) derart gestaltet ist, dass die elektrische Innenbeleuchtung (10) Änderungen der Intensität des tatsächlichen Tageslichts folgt.

5. Kunstlicht-Beleuchtungssystem nach Anspruch 3 oder 4, ferner umfassend einen außen angebrachten Farbsensor (12), gekoppelt mit Mitteln zum Ändern der Farbe des Lichts, das von der elektrischen Innenbeleuchtung (10) emittiert wird.

6. Kunstlicht-Beleuchtungssystem nach Anspruch 5, welches ferner derart gestaltet ist, dass die Lichtfarbe der elektrischen Innenbeleuchtung (10) Änderungen der Farbe des tatsächlichen Tageslichts folgt.

7. Kunstlicht-Beleuchtungssystem nach einem der Ansprüche 1 bis 6, wobei die elektrische Innenbeleuchtung (10) eine oder mehrere LEDs oder ein Array organischer LEDs aufweist.

8. Kunstlicht-Beleuchtungssystem nach einem der Ansprüche 1 bis 7, umfassend mehrere Photovoltaik-Panels (8), welche mit mehreren elektrischen Innenbeleuchtungen (10) gekoppelt sind.

9. Kunstlicht-Beleuchtungssystem nach Anspruch 8, wobei die elektrischen Innenbeleuchtungen (10) in einem Gebäude verteilt sind, in welchem die elektrischen Innenbeleuchtungen (10) verwendet werden.

10. Kunstlicht-Beleuchtungssystem nach Anspruch 9, wobei jede der Innenbeleuchtungen (10) ein eigenes Photovoltaik-Panel (8) aufweist, welches derselben zugeordnet ist.

11. Kunstlicht-Beleuchtungssystem nach Anspruch 10, wobei das Photovoltaik-Panel (8), welches einer gegebenen elektrischen Innenbeleuchtung (10) zugeordnet ist, auf dem Gebäude angeordnet ist, in einem Bereich oberhalb der betroffenen elektrischen Innenbeleuchtung (10).

12. Kunstlicht-Beleuchtungssystem nach einem der Ansprüche 1 bis 11, wobei die elektrische Verbindung zwischen dem Photovoltaik-Panel (8) und der elektrischen Innenbeleuchtung keine elektrischen Komponenten aufweist, welche einen wesentlichen Einfluss auf die Eigenschaften der elektrischen Verbindung zwischen dem Photovoltaik-Panel (8) und der elektrischen Innenbeleuchtung (10) ausüben, außer Leitungen und Schalter.

13. Kunstlicht-Beleuchtungssystem nach einem der Ansprüche 1 bis 12, ferner umfassend einen Farbsensor (12) auf dem Gebäude, welcher mit einer Steuereinheit gekoppelt ist, welche die Farbe des Lichts regelt, das von der Kunstlicht-Innenbeleuchtung (10) emittiert wird.

14. Kunstlicht-Beleuchtungssystem nach Anspruch 13, wobei die Steuerung derart gestaltet ist, dass sie die Farbe des Lichts, das von der Kunstlicht-Innenbeleuchtung (10) emittiert wird, an die Farbe des Tageslichts anpasst, wie sie durch den Sensor (12) auf dem Gebäude festgestellt wird.

15. Kunstlicht-Beleuchtungssystem nach Anspruch 13 oder 14, wobei die Kunstlicht-Innenbeleuchtung einen Farbsensor (12) aufweist, welcher die Farbe des Lichts feststellt, das von der Kunstlicht-Innenbeleuchtung (10) emittiert wird.

16. Kunstlicht-Beleuchtungssystem nach einem der Ansprüche 1 bis 15, umfassend wenigstens zwei Photovoltaik-Panels (8), welche derart positioniert sind, dass sie eine ungleichmäßige kombinierte Stromerzeugung ausgleichen, die durch die Bewegung der Sonne im Tagesverlauf verursacht ist.

17. Kunstlicht-Beleuchtungssystem nach einem der Ansprüche 1 bis 16, ferner umfassend eine elektrische Verbindung zwischen dem Stromnetz und der Kunstlicht-Innenbeleuchtung (10), welche getrennt werden kann.

18. Verfahren zum Beleuchten eines Gebäude-Innenraums, umfassend:
Bereitstellen eines außen angebrachten Photovoltaik-Panels (8) an einer Außenseite eines Gebäudes, welches den Innenraum umschließt,
Anschließen einer elektrischen Innenbeleuchtung (10), welche innerhalb des Innenraums angeordnet ist, in direkter elektrischer Verbindung mit dem Photovoltaik-Panel (8), durch ein Kabel (9) und einen optionalen Schalter, wobei die Lichtintensität der elektrischen Innenbeleuchtung sich mit der Intensität des tatsächlichen Tageslichts ändert.

19. Verfahren nach Anspruch 18, ferner umfassend Feststellen der Farbe des tatsächlichen Tageslichts, mit welchem das außen angebrachte Photovoltaik-Panel (8) beleuchtet ist, und Anpassen der Lichtfarbe, welche durch die elektrische Innenbeleuchtung (10) emittiert wird, an die tatsächliche Farbe des Tageslichts.

20. Gebrauch eines Photovoltaik-Panels (8), welches an der Außenseite eines Gebäudes positioniert ist, das den Gebäude-Innenraum umschließt, zum Simulieren von Tageslicht in dem Gebäude-Innenraum, durch Anschließen einer elektrischen Innenbeleuchtung (10) in direkter elektrischer Verbindung mit dem Photovoltaik-Panel (8), durch ein Kabel (9) und einen optionalen Schalter, wobei die Lichtintensität der elektrischen Innenbeleuchtung sich mit der Intensität des tatsächlichen Tageslichts ändert.

## Revendications

1. Système d'éclairage artificiel pour un bâtiment, ledit système comprenant un éclairage intérieur électrique (10) connecté à un panneau photovoltaïque externe (8) monté sur l'extérieur du bâtiment dans lequel l'éclairage intérieur électrique (10) est monté, **caractérisé en ce que** ledit éclairage intérieur électrique (10) est en connexion électrique directe avec ledit panneau photovoltaïque externe (8) à travers un câble (9) et un commutateur optionnel de telle manière que l'intensité de l'éclairage intérieur électrique varie en fonction de l'intensité de la lumière réelle du jour.

2. Système d'éclairage artificiel selon la revendication 1, dans lequel le panneau photovoltaïque (8) est placé de manière à être exposé à la lumière du jour.

3. Système d'éclairage artificiel selon la revendication 2, dans lequel la connexion entre l'éclairage intérieur (10) et le panneau photovoltaïque (8) est configurée de manière à simuler la lumière réelle du jour.

4. Système d'éclairage artificiel selon la revendication 3, dans lequel la connexion entre l'éclairage intérieur (10) et le panneau photovoltaïque (8) est configurée pour que l'éclairage intérieur électrique (10) suive les variations d'intensité de la lumière réelle du jour.

5. Système d'éclairage artificiel selon la revendication 3 ou 4, comprenant en outre un capteur de couleur externe (12) couplé à un moyen pour faire varier la couleur de la lumière émise par l'éclairage intérieur électrique (10).

6. Système d'éclairage artificiel selon la revendication 5, étant en outre configuré pour que la couleur de l'éclairage intérieur électrique (10) suive les variations de couleur de la lumière réelle du jour.

7. Système d'éclairage artificiel selon l'une quelconque des revendications 1 à 6, dans lequel ledit éclairage intérieur électrique (10) comprend une ou plusieurs diodes électroluminescentes, DEL, ou un réseau de DEL organiques.

8. Système d'éclairage artificiel selon l'une quelconque des revendications 1 à 7, comprenant une pluralité de panneaux photovoltaïques (8) couplés à une pluralité d'éclairages intérieurs électriques (10).

9. Système d'éclairage artificiel selon la revendication 8, dans lequel lesdits éclairages intérieurs électriques (10) sont répartis dans un bâtiment dans lequel les éclairages intérieurs électriques (10) sont utilisés.

10. Système d'éclairage artificiel selon la revendication 9, dans lequel chaque éclairage intérieur (10) comporte un panneau photovoltaïque particulier (8) qui lui est associé.

11. Système d'éclairage artificiel selon la revendication 10, dans lequel le panneau photovoltaïque (8) associé à un éclairage intérieur électrique (10) donné est placé sur le bâtiment dans une zone au-dessus de l'éclairage intérieur électrique (10) concerné.

12. Système d'éclairage artificiel selon l'une quelconque des revendications 1 à 11, dans lequel la connexion électrique entre le panneau photovoltaïque (8) et l'éclairage intérieur électrique ne comprend pas de composants électriques ayant une influence substantielle sur la caractéristique de la connexion électrique entre le panneau photovoltaïque (8) et ledit éclairage intérieur électrique (10) autres que des fils et des commutateurs.

13. Système d'éclairage artificiel selon l'une quelconque des revendications 1 à 12, comprenant en outre un capteur de couleur (12) sur le bâtiment couplé à un organe de commande qui commande la couleur de la lumière émise par l'éclairage intérieur artificiel (10).

14. Système d'éclairage artificiel selon la revendication 13, dans lequel la commande est configurée pour que la couleur de la lumière émise par l'éclairage intérieur artificiel (10) corresponde à la couleur de la lumière du jour qui est détectée par le capteur (12) sur le bâtiment.

15. Système d'éclairage artificiel selon la revendication 13 ou 14, dans lequel ledit éclairage intérieur artificiel comprend un capteur de couleur (12) qui détecte la couleur de la lumière émise par l'éclairage intérieur artificiel (10).

16. Système d'éclairage artificiel selon l'une quelconque des revendications 1 à 15, comprenant au moins deux panneaux photovoltaïques (8) qui sont positionnés pour compenser une sortie de puissance combinée inégale provoquée par le déplacement du soleil au cours de la journée.

17. Système d'éclairage artificiel selon l'une quelconque des revendications 1 à 16, comprenant en outre une connexion électrique entre le secteur et l'éclairage intérieur artificiel (10) qui peut être déconnectée.

18. Procédé d'éclairage d'un espace intérieur comprenant :
la fourniture d'un panneau photovoltaïque externe (8) sur un extérieur d'un bâtiment renfermant ledit espace,
le couplage d'un éclairage intérieur électrique (10) qui est placé à l'intérieur dudit espace en connexion électrique directe avec ledit panneau photovoltaïque (8) à travers un câble (9) et un commutateur optionnel, de telle manière que l'intensité de l'éclairage intérieur électrique varie en fonction de l'intensité de la lumière réelle du jour.

19. Procédé selon la revendication 18, comprenant en outre la détection de la couleur de la lumière réelle du jour à laquelle le panneau photovoltaïque externe (8) est exposé et l'adaptation de la couleur émise par ledit éclairage intérieur électrique (10) à la couleur réelle de la lumière du jour.

20. Utilisation d'un panneau photovoltaïque (8) positionné sur un extérieur d'un bâtiment renfermant un espace intérieur pour simuler la lumière du jour dans ledit espace intérieur, en connectant un éclairage intérieur électrique (10) en connexion électrique directe avec ledit panneau photovoltaïque (8) à travers un câble (9) et un commutateur optionnel, de telle manière que l'intensité de l'éclairage intérieur électrique varie en fonction de l'intensité de la lumière réelle du jour.
